# EUROPÄISCHE PATENTSCHRIFT

(11) **EP 3 271 775 B1**
(45) Veröffentlichungstag und Bekanntmachung des Hinweises auf die Patenterteilung: **24.09.2025**
(21) Anmeldenummer: 16710193.0
(22) Anmeldetag: 16.03.2016
(51) Int. Cl.: G02B 27/01, G02F 1/29, G02B 26/12, G02B 3/08, G02B 13/14, G02B 26/10

(54) **VORRICHTUNG ZUR DATENEINSPIEGELUNG**
DATA PROJECTION SYSTEM
DISPOSITIF DE RÉFLEXION DE DONNÉES

(30) Priorität: 18.03.2015 DE 102015104085
(43) Veröffentlichungstag der Anmeldung: 24.01.2018
(73) Patentinhaber: Carl Zeiss Jena GmbH, 07745 Jena (DE)
(72) Erfinder: BURKHARDT, Matthias, 07745 Jena (DE); ERLER, Christoph, 07745 Jena (DE); GATTO, Alexandre, 51429 Bergisch Gladbach (DE)
(74) Vertreter: Kraus & Lederer PartGmbB
(86) Internationale Anmeldenummer: PCT/EP2016/055710
(87) Internationale Veröffentlichungsnummer: WO 2016/146697

(56) Entgegenhaltungen:
- US-A- 5 982 553
- US-A- 5 982 553
- US-A- 5 982 553
- US-A1- 2006 228 073
- US-A1- 2006 228 073
- US-A1- 2011 109 528
- US-A1- 2011 109 528
- US-A1- 2011 134 017
- US-A1- 2011 134 017
- US-A1- 2011 134 017
- US-B1- 8 233 204
- US-B1- 8 233 204

## Beschreibung

Die vorliegende Anmeldung betrifft Vorrichtungen zur Dateneinspiegelung, insbesondere für sogenannte Head-Up Displays (HUDs). Insbesondere betrifft die vorliegende Anmeldung solche Vorrichtungen, welche in Fahrzeugen, insbesondere in Kraftfahrzeugen, einsetzbar sind.

Vorrichtungen zur Dateneinspiegelung werden zunehmend verwendet, um einem Benutzer Daten auf einfache Weise bereitzustellen. Der Begriff "Daten" ist dabei allgemein zu verstehen, eingespiegelte Daten können beispielsweise Bilder, Videos, Symbole, Zeichen und/oder Zahlen umfassen.

Aus der US 8 233 204 ist eine Vorrichtung zur Dateneinspiegelung mit einer optischen Komponente bekannt, die eine Vielzahl von jeweils einander zugeordneten Einkoppelhologrammen und Auskoppelhologrammen umfasst, die in getrennten Bereichen eines Wellenleiters angeordnet sind.

Ein Anwendungsbereich derartiger Vorrichtungen zur Dateneinspiegelung ist der Fahrzeugbereich, um z.B. einem Führer eines Fahrzeugs, beispielsweise einem Fahrer eines Automobils, während einer Fahrt Daten bereitzustellen. Dies kann bevorzugter Weise in einem Bereich einer Windschutzscheibe eines Fahrzeugs erfolgen, so dass der Fahrer seinen Blick nicht extra auf eine Anzeige beispielsweise eines Kombiinstruments richten muss, um Daten zu erhalten, sondern diese Daten im Wesentlichen wahrnehmen kann, ohne seinen Blick wesentlich von der Umgebung, beispielsweise von einer Straße, abzuwenden. Hierzu sind beispielsweise holografische Head-Up Displays, bei welchen Daten über ein oder mehrere Hologramme bereitgestellt werden, oder auch Head-Up Displays mit Projektionsfläche, bei welchen Daten auf eine beispielsweise im Bereich der Windschutzscheibe angeordnete Projektionsfläche projiziert werden, bekannt.

Ein Beispiel für ein holografisches Head-Up Display ist beispielsweise aus der US 4 832 427 A bekannt. In dieser Druckschrift wird eine Anordnung beschrieben, bei welcher einem Fahrer ein Inhalt eines leuchtenden Displays über zwei Hologramme in ein Sichtfeld beim Blick durch eine Windschutzscheibe nach vorne eingekoppelt wird. Das zweite Hologramm, welches beispielsweise eine teilweise Durchsicht durch die Windschutzscheibe und zudem eine Betrachtung der Daten ermöglicht, wird im Zusammenhang mit Head-Up Displays auch als Combiner bezeichnet. Bei der dort beschriebenen Vorrichtung besteht zudem für den Fahrer die Möglichkeit, das Display durch das erste Hologramm hindurch direkt zu betrachten.

Aus der US 8 934 159 ein Head-Up Display bekannt, bei welchem ein Volumenhologramm als Combiner in einer Windschutzscheibe verwendet wird. In dieser Druckschrift wird zudem eine gezielte Abstimmung von Temperaturabhängigkeiten zwischen quasi-monochromatischen Lichtquellen und einem Material für das Volumenhologramm beschrieben.

Ein weiteres Head-Up Display ist aus der WO 2014/193480 bekannt. Bei der dort beschriebenen Vorrichtung wird als Bildgeber ein Mobiltelefon verwendet, welches beispielsweise ein TFT-Display aufweist. Dabei liegt normalerweise in jedem verwendeten Farbkanal (z.B. rot, grün, blau) eine relativ breite spektrale Verteilung vor, was zu einer dispersionsbedingten Verschmierung der Darstellung eines Bildinhaltes führen kann oder im Falle einer hohen Wellenlängenselektivität des Combiners in der Windschutzscheibe zu einer schlechten energetischen Effizienz führen kann, da nur ein relativ geringer Teil des von dem Display ausgehenden Lichtes von dem Combiner zu dem Betrachter gelangt. Dies kann dann zu einer kontrast- und/oder lichtschwachen Darstellung führen.

Bei den vorgenannten Lösungen wird im Allgemeinen die Windschutzscheibe unter einem relativ großen Winkel als Umlenkelement für den optischen Strahlengang verwendet. Insbesondere bei modernen Fahrzeugen ist die Windschutzscheibe üblicherweise gekrümmt. Dies kann zu Verzerrungen in der Darstellung führen was insbesondere bei größeren Feldwinkeln zu verschlechterten optischen Parametern der Vorrichtung zur Dateneinspiegelung führen kann.

Ein Head-Up Display mit Projektionsfläche ist beispielsweise aus der US 2005/0140929 A1 bekannt. In dieser Druckschrift wird ein Aufbau beschrieben, bei welchem mittels eines scannenden Laserprojektors ein Bild auf eine Projektionsfläche projiziert wird. Bei der Projektionsfläche kann es sich beispielsweise um einen teilweise optisch streuenden Bereich auf einer Windschutzscheibe handeln. Eine ähnliche Vorrichtung wird auch in der WO 2014/115095 offenbart.

Nachteil derartiger herkömmlicher Vorrichtungen mit einer Projektionsfläche ist die Verwendung der im Allgemeinen (insbesondere bei modernen Fahrzeugen) nicht ebenen Windschutzscheibe unter großem Winkel als Projektionsfläche. Die räumliche Lichtverteilung entsteht dabei erst auf dieser Projektionsfläche. Aufgrund der Form der Projektionsfläche, insbesondere durch die gekrümmte Grundform der Windschutzscheibe, ergeben sich bei Betrachtung eines projizierten Bildes aus unterschiedlichen Richtungen Verzerrungen in der Darstellung. Weiterhin erstreckt sich der Ort des so betrachteten Bildes insbesondere bei schräg stehenden Windschutzscheiben moderner Fahrzeuge über einen ausgedehnten Bereich in einer Richtung von einem Betrachter weg bzw. zu einem Betrachter hin. Dies entspricht einer Variation des Abstandes zum Auge, so dass ein größeres Bild nicht simultan scharf gesehen werden kann. Zudem ist eine Projektionsfläche in der Windschutzscheibe in vielen Fällen aufgrund einer zu großen Nähe zum Betrachter wenig ergonomisch.

Es ist daher eine Aufgabe der vorliegenden Anmeldung, die oben diskutierten Nachteile zumindest teilweise zu beseitigen oder abzumildern.

Hierzu wird eine optische Komponente nach Anspruch 1, welche insbesondere als Combiner dienen kann, sowie eine Vorrichtung zur Dateneinspiegelung mit einer Bildgebungseinrichtung und einer derartigen optischen Komponente nach Anspruch 4 bereitgestellt. Die Unteransprüche definieren weitere Ausführungsbeispiele.

Gemäß einem ersten Aspekt wird eine Bildgebungseinrichtung bereitgestellt, umfassend eine Vielzahl von entlang einer Linie in einer ersten Richtung angeordneten Licht gebenden Elementen zum Erzeugen einer Vielzahl von modulierbaren Lichtstrahlen und eine Ablenkeinrichtung zum einstellbaren Ablenken der Lichtstrahlen in einer zweiten Richtung, wobei sich die zweite Richtung von der ersten Richtung unterscheidet. Die zweite Richtung ist dabei bevorzugt im Wesentlichen (z.B. in einem Bereich von +/- 20 Grad, insbesondere in einem Bereich von +/- 5 Grad) senkrecht zur ersten Richtung.

Mit einer derartigen Bildgebungseinrichtung kann eine effiziente Beleuchtung einer entsprechenden optischen Komponente, beispielsweise einer holografischen Komponente, welche als Combiner dient, erreicht werden.

Die Bildgebungseinrichtung kann weiter eine optische Anordnung zum Kollimieren der Lichtstrahlen in der zweiten Richtung umfassen.

Dabei kann zumindest ein Element der optischen Anordnung als die Ablenkeinrichtung dienen.

Die optische Anordnung kann dabei eine sich in der ersten Richtung erstreckende Zylinderlinse umfassen.

Zusätzlich oder alternativ kann die optische Anordnung auch eine Flüssigkristalllinse umfassen.

Zur Implementierung der Ablenkeinrichtung kann dabei ein an die Flüssigkristalllinse anlegbares Spannungsprofil räumlich verschiebbar sein.

Die Vielzahl von Licht gebenden Elementen kann dabei eine Vielzahl von Lichtquellenelementen umfassen.

Die Lichtquellenelemente können dabei Leuchtdioden, organische Leuchtdioden und/oder Laser umfassen.

Die Vielzahl von Lichtquellenelementen kann auch eine Vielzahl von optischen Elementen, welche in der ersten Richtung angeordnet sind, und eine Laserprojektoreinrichtung oder auch mehrere Laserprojektoreinrichtungen zum Abrastern der optischen Elemente in der ersten Richtung umfassen.

Die Ablenkungseinrichtung kann ein rotierendes Element umfassen, wobei die optischen Elemente auf dem rotierenden Element angeordnet sind.

Das rotierende Element kann dabei einen stern - oder vieleckförmigen Querschnitt aufweisen.

Gemäß einem zweiten Aspekt und gemäß der beanspruchten Erfindung umfasst eine optische Komponente für eine Vorrichtung zur Dateneinspiegelung einen Träger mit den Merkmalen des Anspruchs 1. Jedes Hologramm der Vielzahl von ersten Hologrammen kann einem Hologramm der Vielzahl von zweiten Hologrammen zugeordnet sein.

Mit einer derartigen optischen Komponente kann die Windschutzscheibe zumindest teilweise als Lichtleiter dienen, was beispielsweise zu günstigeren Winkelverhältnissen als bei einer Projektion auf eine Projektionsfläche führen kann.

Der Träger kann dabei eine Windschutzscheibe umfassen.

Die erste Seite kann eine einem Betrachter zuzuwendende Seite des Trägers sein.

Die Komponente umfasst eine Vielzahl von ersten Hologrammen , welche zum Einkoppeln dienen, und eine Vielzahl von zweiten Hologrammen. Dabei kann eine gesamte Bildfläche durch eine Matrix von lokal geometrisch optisch angepassten Hologrammpaaren zusammengesetzt sein.

Gemäß einem dritten Aspekt wird eine Vorrichtung zur Dateneinspiegelung bereitgestellt, die eine Beleuchtungseinrichtung wie oben beschrieben und eine Komponente wie oben beschrieben umfasst, wobei die Komponente angeordnet ist, Licht von der Bildgebungseinrichtung zu empfangen.

Die Vorrichtung kann weiter ein Element zur Aufspaltung von Lichtstrahlen, welches zwischen der Bildgebungseinrichtung und der Komponente angeordnet ist, umfassen.

Bei einer derartigen Vorrichtung kann beispielsweise ein Einfluss einer Form der Windschutzscheibe auf die optische Übertragung eines Bildinhaltes mit einzuspiegelnden Daten kompensiert sein.

Im Folgenden werden Ausführungsbeispiele der vorliegenden Offenbarung unter Bezugnahme auf die beigefügten Zeichnungen näher erläutert. Es zeigen:
Fig. 1 eine Bildgebungseinrichtung gemäß einem Ausführungsbeispiel,
Fig. 2 eine Bildgebungseinrichtung gemäß einem weiteren Ausführungsbeispiel,
Fig. 3 eine Vorrichtung zur Dateneinspiegelung gemäß einem Ausführungsbeispiel,
Fig. 4 eine Vorrichtung zur Dateneinspiegelung gemäß einem Ausführungsbeispiel der beanspruchten Erfindung,
Fig. 5 eine Vorrichtung zur Datenseinspiegelung gemäß einem weiteren, nicht erfindungsgemäßen Ausführungsbeispiel,
Fig. 6A bis 6C Darstellungen zur Erläuterung einer alternativen Ablenkeinrichtung für Ausführungsbeispiele von Bildgebungseinrichtungen, und
Fig. 7 eine Vorrichtung zur Dateneinspiegelung gemäß einem weiteren nicht erfindungsgemäßen Ausführungsbeispiel.

Im Folgenden werden verschiedene Ausführungsbeispiele der vorliegenden Offenbarung detailliert erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Merkmalen oder Elementen nicht dahingehend auszulegen, dass alle diese Merkmale oder Elemente zur Ausführung der Erfindung notwendig sind. Vielmehr können andere Ausführungsbeispiele weniger Merkmale oder Elemente aufweisen, und/oder Merkmale oder Elemente der beschriebenen oder dargestellten Ausführungsbeispiele können durch alternative Merkmale oder Elemente ersetzt werden. Zudem können auch weitere Merkmale oder Elemente abgesehen von den explizit dargestellten und beschriebenen bereitgestellt sein. Merkmale oder Elemente verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Der Gegenstand der Erfindung ist in Anspruch 1 definiert.

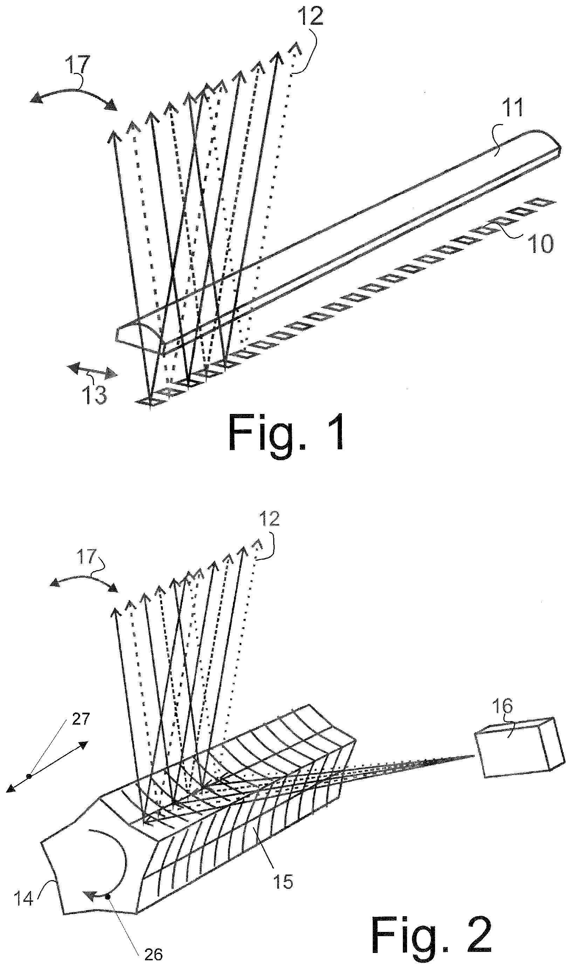

Zunächst werden unter Bezugnahme auf die Figuren 1 und 2 Ausführungsbeispiele von Bildgebungseinrichtungen erläutert, welche dann in erfindungsgemäßen Vorrichtungen zur Dateneinspiegelung verwendet werden können.

Allgemein wird bei Ausführungsbeispielen von Bildgebungseinrichtungen eine Kombination einer leuchtenden Zeile, d.h. einer eindimensionalen, insbesondere regelmäßigen, Anordnung aus einzeln ansteuerbaren und adressierbaren Licht gebenden Elementen, auch als Leuchtpixel bezeichnet, verwendet, welche in einer ersten Richtung angeordnet sind, mit einer in einer zweiten dazu im Wesentlichen senkrechten Richtung wirkenden Ablenkeinheit verwendet. Die oben angesprochene leuchtende Zeile kann beispielsweise eine eindimensionale regelmäßige oder unregelmäßige Anordnung einer Vielzahl von ansteuerbaren Leuchtpixeln gebildet werden. Die Leuchtpixel können bei bevorzugten Ausführungsbeispielen Licht im Wesentlichen gleicher Wellenlänge emittieren (beispielsweise zur monochromen Darstellung) oder können Licht entsprechend mehreren schmalen Wellenlängenbereichen (beispielsweise ein Bereich im Roten, ein Bereich im Blauen und ein Bereich im Grünen) für eine farbige Darstellung emittieren. Beispielsweise kann eine unregelmäßige ("chirped") Anordnung verwendet werden, um Verzerrungen von nachfolgenden optischen Komponenten, z.B. einer Windschutzscheibe, ganz oder teilweise zu korrigieren.

Ein erstes Ausführungsbeispiel einer derartigen Vorrichtung ist ein Fig. 1 dargestellt. Das Ausführungsbeispiel der Fig. 1 umfasst eine Vielzahl von Lichtquellenelementen 10, welche in einer ersten Richtung in einer Linie angeordnet sind. Die Anzahl der dargestellten Lichtquellenelemente 10 dient lediglich als Beispiel, und es kann insbesondere einer deutlich höhere Anzahl an Lichtquellenelementen 10 bereitgestellt sein (beispielsweise mehrere Hundert, oder auch über Tausend Lichtquellenelemente), um eine entsprechende Auflösung in der ersten Richtung zu erreichen. Die Lichtquellenelemente können beispielsweise Laserlichtquellen umfassen, beispielsweise eine Anordnung von Diodenlasern oder anderen Halbleiterlasern, oder können auch andere Lichtquellenelemente wie Leuchtdioden (LEDs) oder organische Leuchtdioden (OLEDs) umfassen. Wenn das verwendete Lichtquellenelement nicht von sich aus schmalbandig ist( wie es beispielsweise bei manchen Lasern der Fall ist), können zusätzliche Maßnahmen zur Änderung der spektralen Bandbreite, beispielsweise optische Filter oder Hologramme, bereitgestellt werden. Bei manchen Ausführungsbeispielen können sämtliche Lichtquellenelemente 10 im Wesentlichen die gleiche Wellenlänge aufweisen. Bei anderen Ausführungsbeispielen können die Lichtquellenelemente 10 mehrere verschiedene Lichtquellenelemente mit verschiedenen Wellenlängen aufweisen. Beispielsweise können Lichtquellenelemente mit einer Wellenlänge im blauen Bereich, Lichtquellenelemente mit einer Wellenlänge im grünen Bereich und Lichtquellenelemente mit einer Wellenlänge im roten Bereich alternierend angeordnet werden, um eine Darstellung farbiger Bilder zu ermöglichen. Weiterhin können Lichtquellenelemente unterschiedlicher Farbe in zwei Dimensionen quer zu der ersten Richtung bzw. Längsachse derart verschoben sein, dass gitter-dispersionsbedingte Effekte auf die Abbildung reduziert werden.

Die Lichtquellenelemente 10, welche bevorzugt räumlich eine geringe Ausdehnung besitzen, werden dann über eine geeignete optische Anordnung in einer zweiten Richtung quer zu der Richtung der Zeile von Lichtquellenelementen 10 kollimiert. Als Beispiel für eine derartige optische Anordnung ist in Fig. 1 eine aberrationskorrigierte Zylinderlinse 11 dargestellt. Dies ist jedoch nur ein Beispiel, und es können auch andere optische Elemente und/oder eine optische Anordnung mit mehr als einem Element verwendet werden. Durch Bewegung der Zylinderlinse 11 in einer zweiten Richtung quer zur ersten Richtung (Zeilenrichtung) wie durch einen Pfeil 13 angedeutet können von den Lichtquellenelementen 10 ausgehende Lichtstrahlen 12 innerhalb eines bestimmten Winkelbereichs 17 ausgelenkt werden, womit dann letztendlich ein zweidimensionales Bild erzeugt werden kann. Der Winkelbereich 17 kann beispielsweise ein Bereich von etwa 5 Grad sein. Die Bewegung in Richtung des Pfeils 13 kann dabei mit einer relativ hohen Frequenz erfolgen, beispielsweise 25 Hz, 50 Hz oder mehr, um eine entsprechend hohe Bildwiederholrate zu erzeugen.

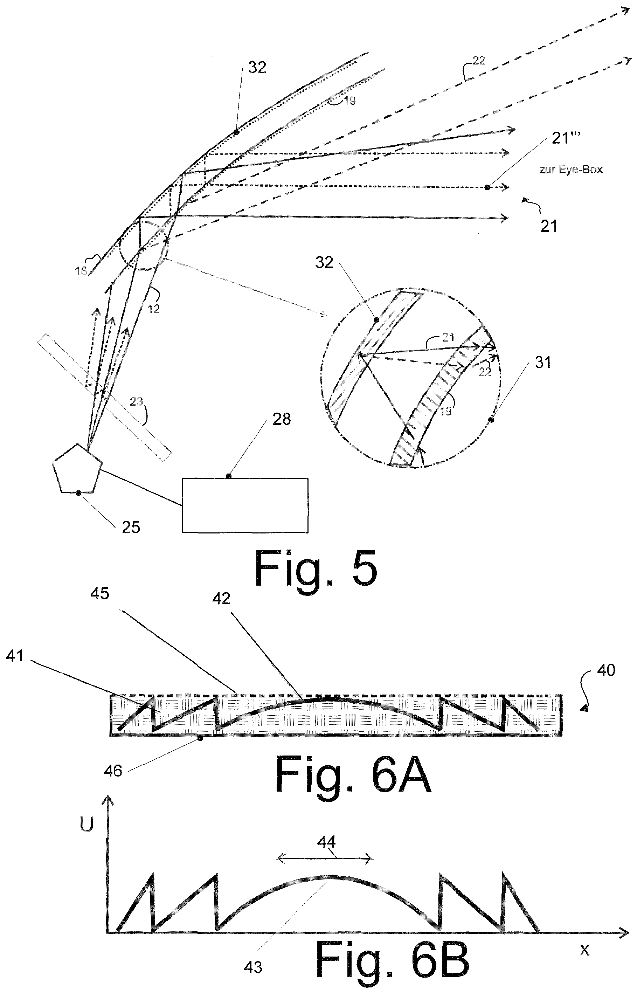

Die aberrationskorrigierte Zylinderlinse 11 stellt lediglich ein Beispiel einer optischen Anordnung dar, welche in diesem Fall gleichzeitig als Ablenkeinrichtung (durch die Bewegung entsprechend dem Pfeil 13) dient. Bei anderen Ausführungsbeispielen können hierzu andere optische Anordnungen verwendet werden. Ein Beispiel für eine derartige optische Anordnung, welche im Wesentlichen die Zylinderlinse 11 der Fig. 1 ersetzen kann, wird nun unter Bezugnahme auf die Fig. 6A-6C diskutiert.

Die Fig. 6A-6C zeigen Darstellungen zur Erläuterung einer Funktionsweise einer Flüssigkristalllinse 40, welche insbesondere ansteuerbar ist, eine Funktion entsprechend der Funktion der Zylinderlinse 11 zu erfüllen.

Die Fig. 6A zeigt eine Querschnittsansicht der Flüssigkristalllinse 40, welche beispielsweise in dem Ausführungsbeispiel der Fig. 1 anstelle der Zylinderlinse 11 verwendbar ist. Die Flüssigkristalllinse 40 umfasst Flüssigkristalle 41 sowie eine streifenförmige Elektrodenstruktur 45, welche auf einer Oberfläche der Flüssigkristalllinse 40 aufgebracht ist. Eine entsprechende Gegenelektrode 46 kann auf der gegenüberliegenden Seite aufgebracht werden.

Die Elektroden 45 können beispielsweise eine Periode < 50 µm oder eine andere gewünschte Periode haben, welche notwendig ist, eine gewünschte Linsenfunktion hinreichend genau zu approximieren. Die Gegenelektrode 46 kann ebenso strukturiert sein oder auch vollflächig ausgeführt werden. Die Elektroden 45, 46 sind dabei transparent ausgeführt.

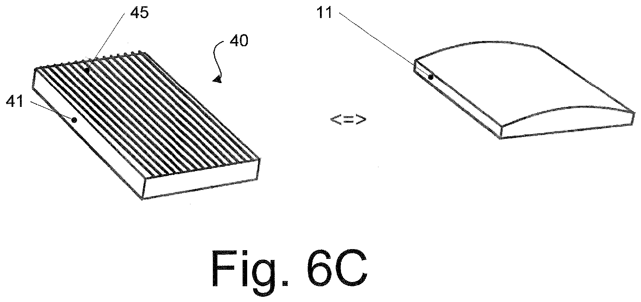

In Fig. 6C ist eine Perspektivansicht der Flüssigkristalllinse 40 im Vergleich mit einer Zylinderlinse wie der Zylinderlinse 11 gezeigt.

Bei derartigen Flüssigkristalllinsen wird durch Anlegen eines Spannungsprofils an der Elektrodenstruktur 45 eine gewünschte Brechkraftverteilung erzeugt. Fig. 6 zeigt als Beispiel ein Brechzahlprofil 42 einer eindimensionalen Fresnel-Linse bzw. einer Fresnel-Zylinderlinse, welche beispielsweise hinsichtlich ihrer optischen Funktion im Wesentlichen der Zylinderlinse 11 der Fig. 1 entsprechen kann.

Ein solches Brechzahlprofil kann beispielsweise durch Anlegen eines Spannungsprofils 43, wie es in Fig. 6B dargestellt ist, an die Elektrodenstruktur 45 erzeugt werden. Fig. 6B zeigt dabei die Spannung U in einer x-Richtung, welche ebenso in Fig. 6A gezeigt ist. In Richtung der Streifen der streifenförmigen Elektroden 45 kann die Spannung U im Wesentlichen konstant sein, was dann bei dem dargestellten Beispiel die Funktion einer langgestreckten Zylinderlinse entsprechend der Zylinderlinse 11 ergibt.

Eine derartige Flüssigkristalllinse 40 arbeitet nach dem Prinzip eines Phase-Only Spatial Light Modulators (SLM). Bei derartigen Lichtmodulatoren wird durch Anlegen der Spannung lediglich eine optische Dichte lokal variiert, nicht jedoch wie z.B. bei Flüssigkristallanzeigeelementen die Transmission. Durch technologische Randbedingungen derartiger Flüssigkristalllinsen, welche zu einer möglichen optischen Verzögerung führen, die typischerweise deutlich unterhalb derjenigen einer konventionellen Linse liegen kann, ist üblicherweise die Verwendung einer Fresnel-Linsenstruktur wie in Fig. 6A dargestellt zur Realisierung einer gewünschten Linsenfunktion erforderlich. Grundsätzlich ist, wenn es die Verzögerungen und optischen Randbedingungen erlauben, jedoch auch die Verwendung von anderen Linsenstrukturen möglich.

Zur Realisierung einer Ablenkfunktion muss dann keine mechanische Bewegung der Linse ausgeführt werden, wie sie für die Zylinderlinse 11 in Fig. 1 beschrieben wurde (entsprechend dem Pfeil 13), sondern eine entsprechende Funktionalität kann durch Verschiebung des Spannungsprofils in x-Richtung entsprechend einem Pfeil 44 der Fig. 6B erreicht werden. Dies verschiebt die Brechzahlverteilung 42 ebenso in x-Richtung, was im Wesentlichen den gleichen Effekt hat wie die mechanische Bewegung der Linse 11. Eine derartige Verschiebung der angelegten Spannung und somit der Feldstärkeverteilung kann sehr schnell, z.B. mit bis zu einigen Kilohertz erfolgen, so dass für den Betrachter die teilweise serielle Bildentstehung durch die Ablenkung nicht wahrnehmbar ist.

Die Darstellungen der Fig. 6A-6C sind lediglich schematische Darstellungen zur Erläuterung der grundsätzlichen Funktionsweise einer Flüssigkristalllinse und deren Anwendung in Ausführungsbeispielen von Bildgebungseinrichtungen. Die konkrete Implementierung kann dann wie für eine jeweils verwendete Flüssigkristalllinse erforderlich erfolgen. Beispielsweise kann je nach den verwendeten Flüssigkristallen 41 erforderlich sein, dass die Spannungsverteilung zu einer gewünschten Brechzahlverteilung invers proportional ist, so dass die Darstellung der Fig. 6B nicht als einschränkend auszulegen ist, sondern lediglich der Veranschaulichung dient. Zudem wird als Spannung bei manchen Ausführungsbeispielen keine Gleichspannung, sondern eine Wechselspannung hoher Frequenz (beispielsweise deutlich höher als die Ablenkfrequenz) verwendet, wobei in diesem Fall die Kurve 43 eine Amplitudenverteilung einer derartigen Wechselspannung darstellt. Die Verwendung einer derartigen Wechselspannung kann beispielsweise verhindern, dass in den Flüssigkristallen 41 Driftbewegungen ausgelöst werden.

Bei anderen Ausführungsbeispielen kann zusätzlich oder alternativ zur Bewegung der Zylinderlinse 11 wie in Fig. 1 gezeigt oder zusätzlich oder alternativ zu einem anderen optischen Element wie der unter Bezugnahme auf die Fig. 6A-6C beschriebenen Flüssigkristalllinse 40 eine Ablenkung durch eine separates Ablenkungselement, beispielsweise einem Element mit Spiegeln, verwendet werden. Ein derartiges Ablenkungselement mit Spiegeln wird auch später unter Bezugnahme auf Fig. 2 näher erläutert.

Fig. 2 zeigt ein weiteres Ausführungsbeispiel einer Bildgebungseinrichtung.

Das Ausführungsbeispiel der Fig. 2 umfasst einen Laserprojektor 16, welcher eine oder mehrere Laserlichtquellen in Kombination mit jeweils zugeordneten Kollimations- und Ablenkeinheiten umfasst. Derartige Laserprojektoren können in herkömmlicher Weise ausgestaltet sein, beispielsweise als herkömmlicher Laserscanner oder herkömmlicher Pocket Laser Projektor.

Bei einer Bildgebungseinrichtung für eine monochrome Darstellung kann der Laserprojektor 16 beispielsweise eine einzige Laserlichtquelle mit einer entsprechenden Farbe aufweisen. Für eine Farbdarstellung kann der Laserprojektor 16 beispielsweise eine Laserlichtquelle je gewünschter Farbe, beispielsweise eine rote, eine blaue und eine grüne Laserlichtquelle, aufweisen.

Der Laserprojektor 16 ermöglicht eine Ablenkung der Laserstrahlen in eine erste Richtung auf eine Vielzahl von optischen Elementen 15, welche auf einer walzenförmigen Ablenkeinrichtung 14 angeordnet sind. Die optischen Elemente 15 können beispielsweise reflektive optische Elemente sein, welche eine Form aufweisen, sodass ein einfallender Laserstrahl in Richtung einer Längsachse der Ablenkeinrichtung 14 aufgeweitet wird. Dies kann beispielsweise durch eine entsprechende Spiegelform der optischen Elemente 15 erreicht werden. Der Laserprojektor 16 rastert dann die optischen Elemente 15 in Längsrichtung 27 (erste Richtung) der Ablenkeinrichtung 14 ab. Somit wird ähnlich dem Ausführungsbeispiel der Fig. 1 effektiv eine Leuchtzeile in der Längsrichtung 27 gebildet, was im Endeffekt einer Lichtquellenanordnung ähnlich der Fig. 10 effektiv entspricht.

Die Ablenkeinrichtung 14 rotiert zudem um ihre Längsachse (entsprechend der Richtung 27) wie durch einen Pfeil 26 angedeutet, beispielsweise mit einer hohen Geschwindigkeit im Bereich von 1000 U/min. Die Ablenkeinrichtung 14 weist wie dargestellt einen sternförmigen Querschnitt auf, was bewirkt, dass sich bei Rotation der Ablenkungseinrichtung 14 die Lichtstrahlen 12 in einem Winkelbereich 17 abgelenkt werden. Der Winkelbereich wird dabei im Wesentlichen durch die Querschnittsform der Ablenkeinrichtung 14 bestimmt. Gleichzeitig resultiert aus der Rotationsbewegung eine periodische Verschiebung der effektiven Quellpunkte quer zur Längsachse, so dass zeitlich gemittelt eine zweidimensionale Leuchtverteilung entsteht. Die Anzahl von optischen Elementen 15 dient dabei lediglich als Beispiel, und es können insbesondere deutlich mehr optische Elemente 15 bereitgestellt sein, entsprechend einer gewünschten Auflösung eines zu erzeugenden Bildes. Auch können andere Querschnittsformen der Ablenkeinrichtung 14, beispielsweise ein vieleckförmiger (dreieckförmiger, viereckförmiger, fünfeckförmiger etc.) Querschnitt verwendet werden.

Wie bereits erläutert, können die optischen Elemente 15 einen jeweils ankommenden Laserstrahl in Längsrichtung 27 aufweiten, was einen definierten Öffnungswinkel zur Schaffung einer geeigneten Pupillenverteilung für jeden Quellpunkt, d.h. jedes optische Element 15, schafft, und quer dazu zu kollimieren, sodass sich der von der Ablenkeinrichtung 14 reflektierte Strahl (bzw. das reflektierte Strahlenbündel) bezüglich der Ablenkrichtung entsprechend dem Winkel 17 parallel ausbreitet.

Die optischen Elemente 15 können regelmäßig oder auch unregelmäßig angeordnet sein, wie vorstehend für die Lichtquellenelemente 10 beschrieben. Jedes optische Element 15 entspricht dem Ursprung eines Lichtquellenpunktes und dient somit zusammen mit dem Laserprojektor 16 als Licht gebendes Element, was also eine Funktion ähnlich der Lichtquellenelemente 10 aus Fig. 1 implementiert.

Zur Erzeugung eines Bildes können dann die Bildgebungseinrichtungen der Fig. 1 oder 2 angesteuert werden, sodass die Beleuchtung in Zeilenrichtung je nach darzustellendem Bild moduliert wird (Modulation der Lichtquellen 10 bzw. des Laserstrahls des Laserprojektors 16). Auf diese Weise kann eine Beleuchtung entsprechend einem gewünschten Bild, beispielsweise entsprechend gewünschter einzuspiegelnder Daten, realisiert werden.

Bei Bildgebungseinrichtungen wie unter Bezugnahme auf Fig. 1 und Fig. 2 erläutert, ist es bevorzugt, dass die Strahlung einzelner Leuchtpixel (beispielsweise einzelner Lichtquellenelemente 10 oder von den einzelnen optischen Elementen 15 ausgehenden Strahlen) nicht kohärent ist, sodass es nicht zu Interferenzerscheinungen der einzelnen Strahlungspfade untereinander kommt. Weiterhin ist es bevorzugt, dass die Kohärenzzeit der Lichtquellen einen bestimmten Wert nicht überschreitet, beispielsweise 1-5 mm, um Interferenzeffekte in nachgeschalteten optischen Komponenten, beispielsweise einem Combiner, zu unterdrücken. Eine teilweise Reduktion dieser Effekte wird durch die bewegte Ablenkeinheit bei manchen Ausführungsbeispielen auch für Quellen mit größerer zeitlicher Kohärenz erreicht.

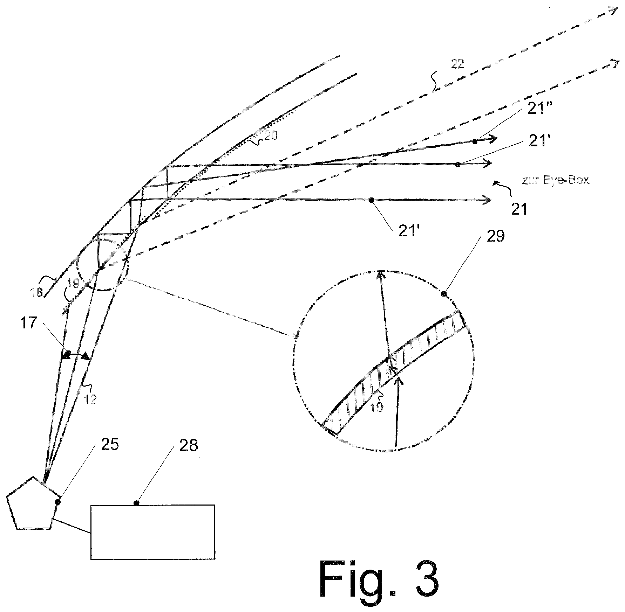

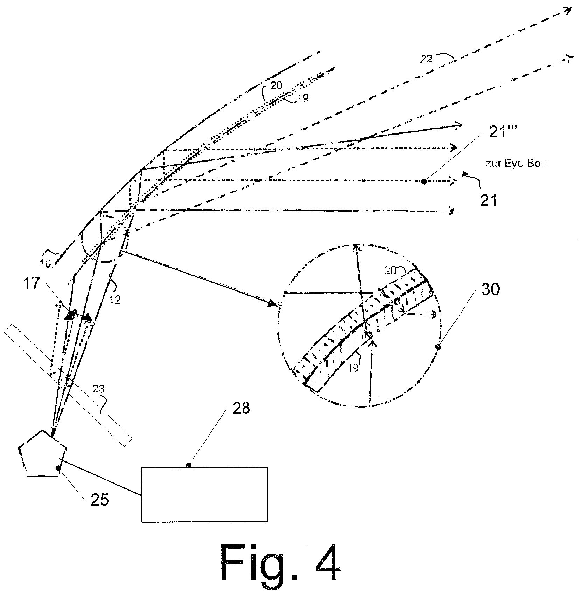

Nunmehr werden unter Bezugnahme auf die Figuren 3 und 4 Vorrichtungen zur Dateneinspiegelung erläutert, welche insbesondere zur Verwendung in Fahrzeugen verwendbar sind.

Das Ausführungsbeispiel der Fig. 3 umfasst eine Bildgebungseinrichtung 25, welche entlang einer Linie senkrecht zur Bildebene der Fig. 3 angeordnete Licht gebende Elemente, beispielsweise Lichtquellenelemente oder durch Reflexion an einzelnen optischen Elementen gebildete Licht gebende Elemente aufweist. Beispielsweise kann die Bildgebungseinrichtung 25 wie unter Bezugnahme auf Fig. 1 oder 2 erläutert eingerichtet sein. Im Falle der Fig. 1 ist die Richtung der Lichtquellenelemente 10 dann senkrecht zur Zeichenebene der Fig. 3, und im Falle der Fig. 2 ist die Richtung 27 senkrecht zur Zeichenebene der Fig. 3. Die Bildgebungseinrichtung 25 wird bei dem Ausführungsbeispiel der Fig. 3 über eine Steuerung 28 angesteuert, welche die Bildgebungseinrichtung 25 ansteuert, Lichtstrahlen 12 entsprechend einzuspiegelnden Daten, d.h. entsprechend einem darzustellenden Bild, zu modulieren. Die Lichtstrahlen 12 werden durch die in einem Winkelbereich 17, wie bereits unter Bezugnahme auf die Figuren 1 und 2 erläutert, abgelenkt, um eine Darstellung eines zweidimensionalen Bildes zu ermöglichen.

Die Lichtstrahlen 17 treffen dann auf einen Träger 18, beispielsweise eine Windschutzscheibe. In einem Bereich, in dem die Lichtstrahlen 12 auf den Träger 18 treffen, ist der Träger 18 bei dem Ausführungsbeispiel der Fig. 3 mit einem Einkoppelhologramm 19 versehen. Das Einkoppelhologramm 19 kann beispielsweise ein Transmissions-Volumenhologramm sein, beispielsweise in Form eines optischen Gitters. Eine Wirkung des Einkoppelhologramms 19 ist in einem Kreis 29 vergrößert dargestellt. Insbesondere wird dabei ein Winkel des Lichtstrahls, welcher auf den Träger 18 trifft, verändert und ein vergleichsweise großer Teil des Lichtstrahls wird in den Träger 18 eingekoppelt. Der Träger 18 wirkt wie dargestellt für die entsprechenden Winkel als Wellenleiter, wobei die Lichtstrahlen dann zu einem Bereich der Windschutzscheibe 18 gelenkt wird, indem die Windschutzscheibe 18 mit einem Auskoppelhologramm 29 versehen ist. Das Auskoppelhologramm 20 kann wiederum ein Transmissions-Volumenhologramm sein und als optisches Gitter ausgestaltet sein.

Bei dem Auskoppelhologramm 20 wird dann jeweils ein Teil des in dem Träger 18 geleiteten Lichts ausgekoppelt, während ein anderer Teil nochmals reflektiert werden kann und an einem anderen Ort ausgekoppelt werden kann. Dies ist in Fig. 3 für zwei ausgekoppelte Strahlen 21' gezeigt, während ein ausgekoppelter Strahl 21" von einem Lichtstrahl 12 einer anderen Richtung stammt und somit auch nach Auskopplung eine andere Richtung aufweist.

Mit 22 ist ein an dem Träger 18 reflektierter Strahl bezeichnet, welcher nicht weiter verwendet wird. Die Intensität eines derartigen reflektierten Strahls kann bei manchen Ausführungsbeispielen durch eine Antireflexbeschichtung des Trägers 18 verringert werden.

Das Auskoppelhologramm 20 kann insbesondere derart ausgestaltet sein, dass es durch eine Krümmung des Trägers 18 (beispielsweise Windschutzscheibe) hervorgerufene Verzerrungen und/oder Aberrationen zumindest teilweise kompensiert. Das dargestellte Prinzip mit Einkoppelhologramm und Auskoppelhologramm ist bis zu einem gewissen Maß tolerant gegenüber vertikal unterschiedlichen Winkeln (beispielsweise Winkelbereich 17). Dieser Winkelbereich wird zur Darstellung der einzuspiegelnden Daten verwendet.

Zur Erweiterung eines verwendbaren Feldwinkels über den möglichen Winkelbereich der Vorrichtung der Fig. 3 hinaus kann eine Anordnung mit Einkoppelhologramm und Auskoppelhologramm auch mehrmals übereinander in oder auf dem Träger 18 angeordnet werden. Dabei können Strahlfallen bereitgestellt sein, sodass Licht einer optischen vorausgehenden derartigen Anordnung nach totaler innerer Reflexion nicht auf die folgende Anordnung überspricht.

Bei einem weiteren Ausführungsbeispiel kann beispielsweise in einer eingebetteten Kunststoffschicht in dem Träger 18 ein holografisches Reflexionselement angeordnet sein, welches eine zusätzliche Aufspaltung des dargestellten Strahlengangs ermöglicht. Dies kann zu einer homogeneren Füllung einer Pupillenverteilung führen.

In Fig. 4 ist ein Ausführungsbeispiel einer Vorrichtung zur Dateneinspiegelung gemäß der beanspruchten Erfindung dargestellt. Das Ausführungsbeispiel der Fig. 4 ist eine Abwandlung des Ausführungsbeispiels der Fig. 3, und gleiche oder einander entsprechende Elemente tragen die gleichen Bezugszeichen. Zur Vermeidung von Wiederholungen werden daher nur die Unterschiede zwischen der Fig. 4 und der Fig. 3 detailliert erläutert. Abgesehen von den nachstehend erläuterten Unterschieden treffen die Erläuterungen für die Fig. 3 auch auf die Fig. 4 zu.

Bei dem Ausführungsbeispiel der Fig. 4 sind das Einkoppelhologramm 19 und das Auskoppelhologramm 20 gemeinsam über einen großen Bereich des Trägers 18 überlappend angeordnet, also nicht räumlich versetzt wie in dem Ausführungsbeispiel der Fig. 3.

Bei dem Ausführungsbeispiel der Fig. 3 erreichen die Strahlen (Bündel) 12 innerhalb eines bestimmten Zeitintervalls einen bestimmten Bereich des Trägers mit dem Einkoppelhologramm 19.

Dies verändert die Einkopplung und Auskopplung, wie in einem vergrößerten Bereich 30 dargestellt ist. Zudem ist bei dem Ausführungsbeispiel der Fig. 4 ein zusätzliches Element 23 zur vertikalen Pupillenaufspaltung vorgesehen, welches beispielsweise wie dargestellt durch interne Reflexion jeden Strahl 12 in eine Vielzahl paralleler Strahlen (Bündel) aufspaltet. Die Strahlenbündel 12 werden somit durch das Element 23 vervielfacht und versetzt auf den Träger 18 mit dem Einkoppelhologramm 19 und dem Auskoppelhologramm 20 projiziert. Durch das Element 23 wird eine verbesserte Füllung einer Pupille erreicht, d.h. es werden mehr Lichtstrahlen gleicher Richtung örtlich versetzt ausgekoppelt, wie dies als Beispiel durch einen Lichtstrahl 21‴ in Fig. 4 dargestellt ist. Dabei wird bei manchen Ausführungsbeispielen die Bündelbreite parallel versetzter Strahlen derart begrenzt, dass es nicht zu starken Bildfehlern durch einen zu großen adressierten vertikalen Bereich auf dem Combiner (z.B. Träger 18 mit Hologrammen) kommt.

Ein Element wie das Element 23 kann dabei auch in dem Ausführungsbeispiel der Fig. 3 bereitgestellt werden.

Durch die Verteilung des Einkoppelhologramms 19 und des Auskoppelhologramms 20 über einen großen Bereich der Windschutzscheibe wie in Fig. 4 wird bevorzugt zur Sicherstellung eines guten Punktbildes das Auskoppelhologramm 20 so ausgestaltet, dass eine hohe Auskoppeleffizienz (zum Beispiel 80%...90%) eine relativ geringe Zahl an Mehrfachreflexionen 21‴ auftreten.

Bei anderen Ausführungsbeispielen kann statt oder zusätzlich zu dem insbesondere als Transmissionshologramm ausgestalteten Auskoppelhologramm 20 ein Reflexionshologramm bereitgestellt sein. Ein nicht der beanspruchten Erfindung entsprechendes Ausführungsbeispiel ist in der Fig. 5 dargestellt. Die Fig. 5 ist dabei eine Abwandlung des Ausführungsbeispiels der Fig. 4, bei welcher das Auskoppelhologramm 20, welches als Transmissionshologramm arbeitet, durch ein Reflexionshologramm 32 ersetzt wurde. Bei der beanspruchten Erfindung entsprechenden Ausführungsbeispielen kann das Reflexionshologramm 32 zusätzlich zu dem Auskoppelhologramm 20 bereitgestellt sein. Das Reflexionshologramm 32 ist bei dem dargestellten Beispiel auf einer gegenüberliegenden Seite des Trägers 18 verglichen mit dem Einkoppelhologramm 19 angeordnet.

Ein vergrößerter Ausschnitt 31 zeigt den Strahlengang. Durch das Reflexionshologramm 32 kann insbesondere bei manchen Ausführungsbeispielen eine spektrale Einengung erfolgen, indem nur Strahlung eines engen Spektralbereichs reflektiert wird, während das Reflexionshologramm 32 für Strahlung anderer Wellenlängen durchlässig ist. Dies kann insbesondere nützlich sein, wenn Lichtquellen mit vergleichsweise großer Bandbreite zum Einsatz kommen, wie Leuchtdioden oder organische Leuchtdioden, beispielsweise als Lichtquellenelemente 10 der Fig. 1. In einem derartigen Fall kann beispielsweise ein spektraleinengendes Reflexionshologramm ein Verschmieren eines darzustellenden Punktbildes durch eine Wirkung einer Dispersion von beugenden Hologrammstrukturen wie dem Einkoppelhologramm 19 verringert oder vermieden werden. Grund hierfür ist dabei die zumindest bei manchen Reflexionshologrammen, insbesondere dicken Reflexionshologrammen, starke Wellenlängenabhängigkeit des Reflexionsgrades des (dicken) Reflexionshologramms (Bragg-Gitter), entsprechend einem vergleichsweise schmalen so genannten Akzeptanzspektrums. Das Akzeptanzspektrum eines Transmissionshologramms ist dagegen typischerweise vergleichsweise breit, was die Übertragung breiter Spektren bewirkt (Verschmierungsgefahr wie oben beschrieben). Der typischerweise geringe Akzeptanzwinkel eines Transmissionshologramms bewirkt dagegen eine saubere Trennung der Strahlwege von ungenutztem und genutztem Licht.

Während das Ausführungsbeispiel der Fig. 5 als Modifizierung des Ausführungsbeispiels der Fig. 4 dargestellt wurde, kann eine ähnliche Modifizierung, d.h. das Bereitstellen eines Reflexionshologramms, auch in dem Ausführungsbeispiel der Fig. 3 erfolgen.

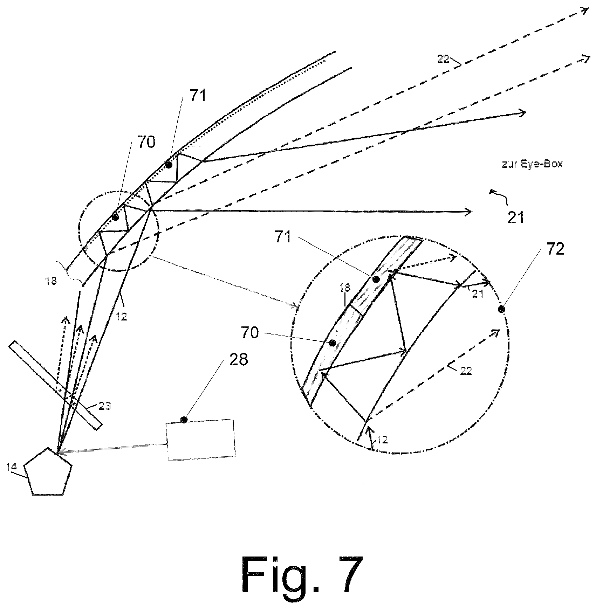

Eine weitere nicht der beanspruchten Erfindung entsprechende Abwandlung ist in Fig. 7 dargestellt. Wiederum tragen Komponenten und Elemente, welche bereits unter Bezugnahme auf die Fig. 3-5 erläutert wurden, die gleichen Bezugszeichen und werden nicht nochmals detailliert erläutert.

Bei dem Ausführungsbeispiel der Fig. 7 dienen Reflexionshologramme sowohl zum Einkoppeln des Lichtes in den Träger 18 also auch zum Auskoppeln des Lichtes aus dem Träger 18. Insbesondere dient ein erstes Reflexionshologramm 70 zum Einkoppeln der Strahlen 12, und ein zweites Reflexionshologramm dient zum Auskoppeln des Lichtes. Das erste Reflexionshologramm 70 und das zweite Reflexionshologramm 71 können dabei nebeneinander, überlappend oder alternierend auf einer einem Betrachter abgewandten Seite des Trägers 18 angeordnet sein.

Ein Ausschnitt 72 zeigt ein Beispiel für einen möglichen Strahlengang. Ein Strahl 12 trifft unter einem Winkel auf den Träger 18 derart, dass zumindest ein Teil des Strahls in den Träger gelangt und auf das erste Reflexionshologramm 70 fällt. Ein anderer Teil des Strahls 12 kann als Strahl 22 reflektiert werden.

Das erste Reflexionshologramm 70 verändert den Winkel des Strahls derart, dass eine Totalreflexion in dem Träger 18 erfolgt, bis der Strahl auf das zweite Reflexionshologramm 71 trifft. Hier wird wiederum der Winkel des Strahls (oder eines größten Teils hiervon) so verändert, dass keine Totalreflexion mehr erfolgt, sondern der Strahl (oder ein Teil hiervon) als Strahl 21 aus dem Träger 18 ausgekoppelt wird. Die jeweiligen Reflexionswinkel der Hologramme 70, 71 sind dabei über das Design der Hologramme einstellbar.

Die Vorrichtung der Fig, 7 mit zwei Reflexionshologrammen 70, 71 eignet sich insbesondere für vergleichsweise schmalbandige Lichtquellen, da typische Reflexionshologramme in einem gewissen Wellenlängenbereich arbeiten, aber sich die Winkel wellenlängenabhängig verändern. Hierdurch kann es bei breitbandigeren Lichtquellen zu einer unscharfen oder verschmierten Wiedergabe der darzustellenden Daten kommen.

Mit den dargestellten Ausführungsbeispielen wird ein Anzeigen von darzustellenden Daten in Form einer wechselnden Helligkeitsverteilung durch die Strahlenbündel 12, welche von einer Bildgebungseinrichtung erzeugt werden, ermöglicht. Die wechselnde Helligkeitsverteilung kann durch Modulation von Helligkeiten einzelner Licht gebender Elemente wie der Lichtquellen 10 der Fig. 1 oder durch Modulation der Helligkeit eines abrasternden Laserstrahls wie der von dem Projektor 16 in Fig. 2 erzeugten Strahl erfolgen. Die Kombination der so steuerbaren Leuchtzeile und einer Strahlablenkung im Winkelbereich 17 ermöglicht die Realisierung einer Dateneinspiegelung auch derart, dass ein Betrachter, beispielsweise ein Fahrer, die einzuspiegelnden Daten in einem gewissen Abstand von dem Träger 18 gemeinsam mit Umgebungsinformation wahrnimmt.

Dabei kann bei den dargestellten Ausführungsbeispielen der Träger 18 lokal als Wellenleiter über eine gewisse Distanz verwendet werden, was eine gewisse zusätzliche optische Propagationslänge zwischen Einkopplung und Auskopplung des Lichts in den Träger realisiert. Hierdurch entsteht ein zusätzlicher Freiheitsgrad für lokale Aberrationskorrekturen.

Durch die Ausführungsbeispiele der Figuren 1 und 2 kann eine kompakte Bildgebungseinrichtung erzeugt werden, welche zusammen mit den dargestellten Ausführungsbeispielen von Combinern (Träger 18) zusammen mit den Hologrammen (19, 70, 20, 32 und/oder 71) die von der Bildgebungseinrichtung erzeugte Strahlung derart zu einem Betrachter lenkt, dass dieser die einzuspiegelnden Daten betrachten kann.

Die dargestellten Ausführungsbeispiele sind lediglich als Beispiele zu verstehen, und aus dem Vorstehenden ergibt sich, dass verschiedene Variationen und Abwandlungen möglich sind.

## Patentansprüche

1. Optische Komponente für eine Vorrichtung zur Dateneinspiegelung, umfassend:
einen Träger (18),
eine Vielzahl von an einer ersten Seite des Trägers (18) angeordneten ersten
Hologrammen (19) zur Einkopplung von Licht in den Träger, wobei der Träger (18) eingerichtet ist, als Wellenleiter für das eingekoppelte Licht zu arbeiten,
und
eine Vielzahl von zweiten Hologrammen (20) zum Auskoppeln von Licht aus dem Träger,
wobei die Vielzahl von ersten Hologrammen (19) Transmissionshologramme sind,
wobei die Vielzahl von zweiten Hologrammen weitere Transmissionshologramme (20) zum Auskoppeln von Licht aus dem Träger umfassen, wobei die weiteren Transmissionshologramme (20) auf der ersten Seite des Trägers (18) angeordnet sind,
wobei ein erstes Hologramm und ein zweites Hologramm über einen Bereich des Trägers überlappend angeordnet sind.

2. Komponente nach Anspruch 1, wobei jedes Hologramm der Vielzahl von ersten Hologrammen (19) einem Hologramm der Vielzahl von zweiten Hologrammen (20) zugeordnet ist.

3. Komponente nach Anspruch 1 oder 2, wobei die erste Seite eine einem Betrachter zuzuwendende Seite des Trägers (18)ist.

4. Vorrichtung zur Dateneinspiegelung, umfassend:
eine Bildgebungseinrichtung, umfassend:
eine Vielzahl von in einer ersten Richtung entlang einer Linie angeordneten Licht gebenden Elementen zum
Erzeugen einer Vielzahl von modulierbaren Lichtstrahlen, und
eine Ablenkeinrichtung zum einstellbaren Ablenken der Lichtstrahlen in einer zweiten Richtung, wobei sich die zweite Richtung von der ersten Richtung unterscheidet,
eine Komponente nach einem der Ansprüche 1-3, wobei die Komponente angeordnet ist,
Licht von der Bildgebungseinrichtung zu empfangen.

5. Vorrichtung nach Anspruch 4, wobei die zweite Richtung im Wesentlichen senkrecht zur ersten Richtung ist.

6. Vorrichtung nach Anspruch 4 oder 5, weiter umfassend eine optische Anordnung (11; 40) zum Kollimieren der Lichtstrahlen in der zweiten Richtung.

7. Vorrichtung nach Anspruch 6, wobei zumindest ein Element (11; 40) der optischen Anordnung als die Ablenkeinrichtung dient.

8. Vorrichtung nach Anspruch 6 oder 7, wobei die optische Anordnung eine sich in der ersten Richtung erstreckende Zylinderlinse (11) umfasst.

## Claims

1. Optical component for a device for data projection, comprising:
a carrier (18),
a multiplicity of first holograms (19), arranged on a first side of the carrier (18), for coupling light into the carrier,
wherein the carrier (18) is adapted to operate as a waveguide for the coupled-in light, and
a multiplicity of second holograms (20) for coupling light out of the carrier,
wherein the multiplicity of first holograms (19) are transmission holograms, wherein the multiplicity of second holograms comprise further transmission holograms (20) for coupling light out of the carrier, wherein the further transmission holograms (20) are arranged on the first side of the carrier (18), wherein a first hologram and a second hologram are arranged overlapping over a region of the carrier.

2. Component according to Claim 1, wherein each hologram of the multiplicity of first holograms (19) is assigned to a hologram of the multiplicity of second holograms (20).

3. Component according to Claim 1 or 2, wherein the first side is a side of the carrier (18) that should face towards a viewer.

4. Device for data projection, comprising:
an imaging apparatus, comprising:
a multiplicity of light-emitting elements arranged in a first direction along a line for generating a multiplicity of modulable light beams, and
a deflection apparatus for adjustably deflecting the light beams in a second direction,
wherein the second direction differs from the first direction,
a component according to any of Claims 1-3, wherein the component is arranged to receive light from the imaging apparatus.

5. Device according to Claim 4, wherein the second direction is substantially perpendicular to the first direction.

6. Device according to Claim 4 or 5, further comprising an optical arrangement (11; 40) for collimating the light beams in the second direction.

7. Device according to Claim 6, wherein at least one element (11; 40) of the optical arrangement serves as the deflection apparatus.

8. Device according to Claim 6 or 7, wherein the optical arrangement comprises a cylindrical lens (11) extending in the first direction.

## Revendications

1. Composant optique destiné à un dispositif de réflexion de données, comprenant :
un support (18),
une pluralité de premiers hologrammes (19) agencés sur une première face du support (18) pour injecter de la lumière dans le support,
le support (18) étant conçu pour fonctionner en tant que guide d'ondes pour la lumière injectée, et
une pluralité de seconds hologrammes (20) destinés à extraire la lumière du support,
la pluralité de premiers hologrammes (19) étant des hologrammes de transmission, la pluralité de seconds hologrammes comprenant d'autres hologrammes de transmission (20) destinés à extraire la lumière du support, lesdits autres hologrammes de transmission (20) étant agencés sur la première face du support (18), un premier hologramme et un second hologramme étant agencés de manière à se chevaucher sur une zone du support.

2. Composant selon la revendication 1, dans lequel chaque hologramme de la pluralité de premiers hologrammes (19) est associé à un hologramme de la pluralité de seconds hologrammes (20).

3. Composant selon la revendication 1 ou 2, dans lequel la première face est une face du support (18) destinée à faire face à un observateur.

4. Dispositif de réflexion de données, comprenant :
un équipement de rendu d'image, comprenant :
une pluralité d'éléments qui émettent de la lumière et sont agencés le long d'une ligne dans une première direction pour
générer une pluralité de faisceaux lumineux modulables, et
un système de déviation destiné à dévier de manière réglable les faisceaux lumineux dans une seconde direction, la seconde direction étant différente de la première direction,
un composant selon l'une des revendications 1 à 3, ledit composant étant agencé pour recevoir de la lumière en provenance de l'équipement de rendu d'image.

5. Dispositif selon la revendication 4, dans lequel la seconde direction est sensiblement perpendiculaire à la première direction.

6. Dispositif selon la revendication 4 ou 5, comprenant en outre un ensemble optique (11 ; 40) destiné à collimater les faisceaux lumineux dans la seconde direction.

7. Dispositif selon la revendication 6, dans lequel au moins un élément (11 ; 40) de l'ensemble optique sert de système de déviation.

8. Dispositif selon la revendication 6 ou 7, dans lequel l'ensemble optique comprend une lentille cylindrique (11) s'étendant dans la première direction.
